(19) Europäisches Patentamt
European Patent Office
Office européen des brevets

(11) **EP 4 141 745 A1**

(12) **EUROPEAN PATENT APPLICATION**

(43) Date of publication:
**01.03.2023 Bulletin 2023/09**

(21) Application number: **22170976.9**

(22) Date of filing: **29.04.2022**

(51) International Patent Classification (IPC):
**G06N 3/04** $^{(2006.01)}$

(52) Cooperative Patent Classification (CPC):
**G06N 3/045**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.08.2021 JP 2021136804**

(71) Applicant: **FUJITSU LIMITED**
**Kawasaki-shi, Kanagawa 211-8588 (JP)**

(72) Inventors:
• **KRESHPA, Enxhi**
**Kawasaki-shi, Kanagawa, 211-8588 (JP)**
• **TABARU, Tsuguchika**
**Kawasaki-shi, Kanagawa, 211-8588 (JP)**
• **SAKAI, Yasufumi**
**Kawasaki-shi, Kanagawa, 211-8588 (JP)**

(74) Representative: **Haseltine Lake Kempner LLP**
**Cheapside House**
**138 Cheapside**
**London EC2V 6BJ (GB)**

(54) **THRESHOLD DETERMINATION PROGRAM, THRESHOLD DETERMINATION METHOD, AND INFORMATION PROCESSING APPARATUS**

(57) A threshold determination program in which a computer performs processing of quantitating a plurality of numerical values of a quantization target using a variable representing a candidate of a threshold, and determining the threshold based on a quantization error for each of the plurality of numerical values, the quantization error is specified based on the quantitating.

FIG. 6

**Description**

[Field]

The embodiment discussed herein is related to a threshold determination technology.

[Background Art]

A neural network that is one kind of a trained model generated through machine learning is used to infer input data in various fields such as image processing or natural language processing (for example, NPL 1 and NPL 2).

Due to a complicated configuration of a neural network in recent years, power consumption of a computer that performs inference using the neural network tends to increase. Therefore, the neural network may be quantized to reduce the power consumption. The quantization of the neural network is processing of converting a numerical value to be quantized represented by a predetermined bit width into a quantized numerical value represented by a smaller bit width.

Although the quantization of the neural network is effective for reducing power consumption and a memory usage, accuracy of a numerical value to be quantized is deteriorated. For example, when a 32-bit single precision floating point number (FP32) is converted into an eight-bit integer (INT8) through quantization, inference accuracy largely decreases (for example, NPL 3).

A technique has been known that promotes efficiency improvement of the neural network in relation to the quantization of the neural network (for example, PTL 1). A neural network learning device has been also known that enables appropriate calculation while reducing a weight of a convolutional neural network (CNN) by lowering a bit of the calculation (for example, PTL 2). A method for adjusting accuracy regarding some selected layers in the neural network to a lower bit has been also known (for example, PTL 3).

A sequence conversion model based on an attention mechanism has been also known (for example, NPL 4).

[Citation List]

[Patent Literature]

[PTL 1] Japanese National Publication of International Patent Application No. 2021-500654
[PTL 2] Japanese Laid-open Patent Publication No. 2020-9048,
[PTL 3] Japanese Laid-open Patent Publication No. 2020-113273

[Non-Patent Literature]

[NPL 1] A. Canziani et al, "An Analysis of Deep Neural Network Models for Practical Applications", arXiv:1605.07678v4, April 14, 2017.
[NPL 2] O. Sharir et al., "The Cost of Training NLP Models: A Concise Overview", arXiv:2004.08900v1, April 19, 2020.
[NPL 3] Szymon Migacz, NVIDIA, "8-bit Inference with TensorRT", [online], May 8, 2017, (retrieved on June 16, 2021), Internet URL: https://on-demand.gputechconf.com/gtc/2017/presentation/s7310-8-bit-inference-with-tensorrt.pdf.
[NPL 4] A. Vaswani et al., "Attention is All You Need", 31st Conference on Neural Information Processing Systems (NIPS 2017), 2017 are disclosed as related art.

[Summary]

[Technical Problem]

In the quantization of the neural network, it is important to select an appropriate scaling factor for converting a numerical value to be quantized into a quantized numerical value. The numerical value to be quantized is a weight of each of a plurality of edges between two layers of the neural network, an output value of each of a plurality of nodes included in each layer of the neural network, or the like. The output value of each node is called an activation. The plurality of numerical values to be quantized and the plurality of quantized numerical values may also be represented by tensors.

There is a case where the accuracy of the quantized numerical value is improved by performing clipping on the numerical value to be quantized. The clipping is processing of converting a numerical value that is deviated from a numerical value range defined by a threshold into a quantized numerical value corresponding to the threshold. However, it is difficult to select an appropriate threshold for the clipping.

Note that, the problem is caused not only in quantization of the weight or the activation but also in quantization of various numerical values in the neural network.

In one aspect, an object of the embodiment is to suppress decrease in inference accuracy caused by quantization of a neural network.

[Solution to Problem]

According to an aspect of the embodiments, a threshold determination program in which a computer performs processing of quantitating (quantifying) a plurality of numerical values of a quantization target using a variable representing a candidate of a threshold, and determining the threshold based on a quantization error for each of the plurality of numerical values, the quantization error is specified based on the quantitating.

[Advantageous Effects of Invention]

According to one aspect, it is possible to suppress decrease in inference accuracy caused by quantization of a neural network.

[Brief Description of Drawings]

Embodiments are set out, by way of example only, with reference to the following drawings, in which:

FIG. 1 is a flowchart of threshold determination processing of a comparative example;
FIG. 2 is a diagram illustrating update processing;
FIG. 3 is a diagram illustrating an experimental result in a case where quantization in NPL 3 is applied;
FIG. 4 is a functional structure diagram of a threshold determination device according to an embodiment;
FIG. 5 is a functional structure diagram of an inference device;
FIG. 6 is a flowchart of threshold determination processing executed by the inference device;
FIG. 7 is a diagram illustrating a distribution of weights;
FIG. 8 is a flowchart of the threshold determination processing for the weight;
FIG. 9 is a diagram illustrating an experimental result in a case where quantization according to the embodiment is applied; and
FIG. 10 is a hardware structure diagram of an information processing device.

[Description of Embodiments]

Hereinafter, an embodiment will be described in detail with reference to the drawings.

In the quantization of NPL 3, when a FP32 is converted into an INT8, a numerical value range of the FP32 is limited by performing clipping before a scaling factor is applied. In this case, the upper limit of the numerical value range is defined by a positive threshold + | T |, and the lower limit of the numerical value range is defined by a negative threshold - | T |.

Therefore, through quantization, a floating point number equal to or less than - | T | is converted into an integer corresponding to - | T |, and a floating point number equal to or more than + | T | is converted into an integer corresponding to + | T |. The integer corresponding to - | T | is - 127, and the integer corresponding to + | T | is + 127. The floating point number less than - | T | and the floating point number larger than + | T | are referred to as outliers.

By performing clipping before the scaling factor is applied, quantization noise can be reduced, and accuracy of a quantized numerical value is improved.

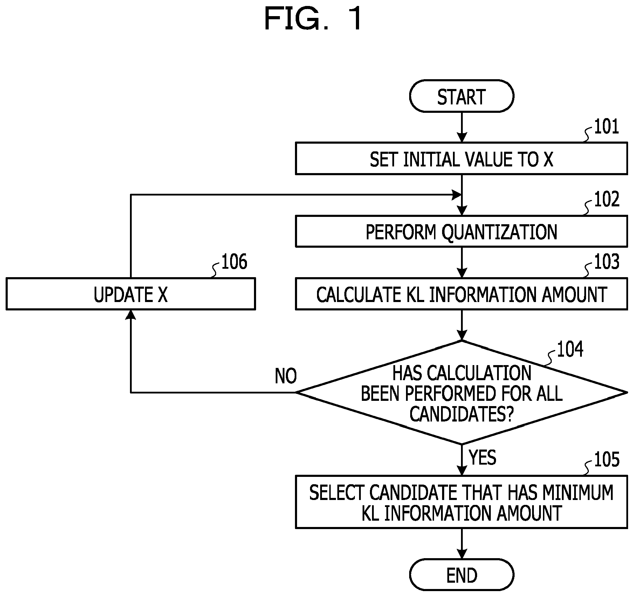

FIG. 1 is a flowchart illustrating an example of threshold determination processing according to a comparative example based on NPL 3. The threshold determination processing in FIG. 1 is executed for each layer in a neural network.

First, a computer sets an initial value to a variable X representing a candidate of a threshold indicating the lower limit or the upper limit of the numerical value range (step 101) and quantizes N (N is integer equal to or more than two) numerical values to be quantized using the variable X (step 102). In step 102, the computer converts a numerical value out of the numerical value range defined by the variable X into a quantized numerical value corresponding to the variable X and converts the numerical value within the numerical value range into a quantized numerical value using the scaling factor.

3

Next, the computer calculates a Kullback-Leibler information amount (Kullback-Leibler divergence, KL information amount) according to the following formula using a probability distribution P of N numerical values to be quantized and a probability distribution Q of N numerical values after being quantized (step 103).

[Expression 1]

$$KL(P||Q) = \sum_{i=1}^{N} P(i) log \frac{P(i)}{Q(i)} \qquad (1)$$

KL (P | | Q) in the equation (1) represents the KL information amount of the probability distribution P and the probability distribution Q, P (i) represents a probability of an i-th (i = 1 to N) numerical value to be quantized, and Q (i) represents a probability of an i-th numerical value after being quantized. log represents a binary logarithm or a natural logarithm. KL (P | | Q) is used as an index representing a difference between the probability distribution P and the probability distribution Q.

Next, the computer checks whether or not the KL information amount is calculated for all candidates (step 104). When an unprocessed candidate remains (step 104, NO), the computer updates the value of the variable X (step 106) and repeats processing in and after step 102 on the next candidate.

When the KL information amount has been calculated for all the candidates (step 104, YES), the computer selects a candidate that has the minimum KL information amount as a threshold (step 105).

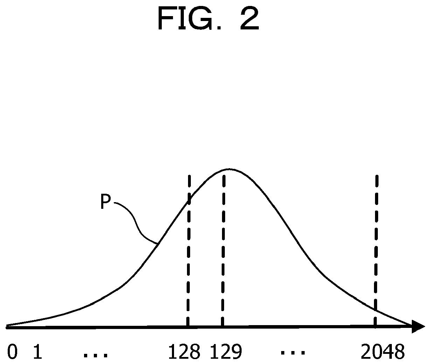

FIG. 2 illustrates an example of update processing in step 106 in FIG. 1. Numbers zero to 2048 indicate positions of bins of a histogram representing the probability distribution P. In this case, the variable X represents a candidate of a threshold indicating the upper limit of the numerical value range, and an initial value of the variable X is set to the position of the 128-th bin.

In step 106, the computer increases the variable X by a bin width by incrementing the position of the bin indicating the value of the variable X by one. By repeating the processing in step 106, the value of the variable X changes from the position of the 128-th bin to the position of the 2048-th bin. In step 102, an outlier that is larger than the variable X is converted into a quantized numerical value corresponding to the variable X.

By performing quantization using a threshold that has the minimum KL information amount, it is possible to make the probability distribution of the quantized numerical value be closer to the probability distribution of the numerical value to be quantized. However, the threshold determination processing in FIG. 1 is merely effective for the quantization for converting a CNN activation into an eight-bit numerical value.

The KL information amount only includes information regarding an appearance frequency of each numerical value to be quantized and an appearance frequency of each quantized numerical value and does not include information regarding these numerical values. Therefore, when a bit width of the quantized numerical value is small, there is a case where inference accuracy largely decreases even if the quantization is performed using the threshold that has the minimum KL information amount.

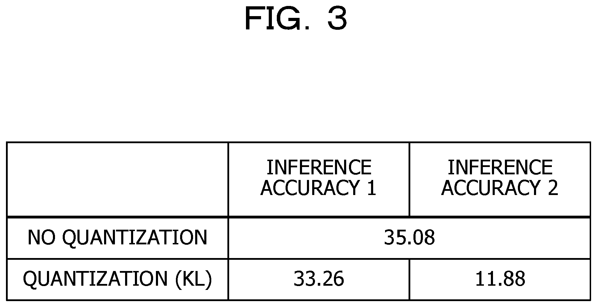

FIG. 3 illustrates an example of an experimental result in a case where NPL 3) is applied. In this experiment, as a trained model, a transformer that is a sequence conversion model described in NPL 4 is used. The transformer used for the experiment includes an encoder and a decoder, and each of the encoder and the decoder includes nine fully-coupled layers.

The numerical value to be quantized is a weight of a linear layer in a multi-head attention block included in each layer of the encoder or the decoder and is represented by the FP32. A bit width of the quantized numerical value is two bits.

As a dataset, a German-English translation dataset of Multi30k is used. Training data includes 29000 sentences, verification data includes 1014 sentences, and input data to be inferred includes 1000 sentences.

No quantization represents a case where inference is performed without quantizing the weight represented by the FP32, and the quantization (KL) represents a case where inference is performed by applying the quantization on the basis of the threshold that has the minimum KL information amount.

Inference accuracy 1 represents a bilingual evaluation understudy (BLEU) score when the quantization is applied to the nine fully-coupled layers of the encoder. Inference accuracy 2 represents a BLEU score when the quantization is applied to the nine fully-coupled layers of each of the encoder and the decoder. The higher the BLEU score is, the higher the inference accuracy is.

The inference accuracy with no quantization is 35.08. On the other hand, the inference accuracy 1 of the quantization (KL) is 33.26, and the inference accuracy 2 of the quantization (KL) is 11.88. In this case, it can be understood that the inference accuracy 2 of the quantization (KL) is largely decreased.

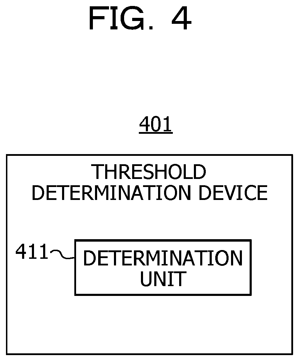

FIG. 4 illustrates an exemplary functional structure of a threshold determination device according to the embodiment. A threshold determination device 401 in FIG. 4 includes a determination unit 411. In the quantization of the neural network, when a numerical value deviated from the numerical value range defined by the threshold of a plurality of numerical values to be quantized is converted into a quantized numerical value corresponding to the threshold, the determination unit 411 determines the threshold. At this time, the determination unit 411 determines the threshold based on a quantization error for each of the plurality of numerical values.

According to the threshold determination device 401 in FIG. 4, it is possible to suppress decrease in the inference accuracy caused by the quantization of the neural network.

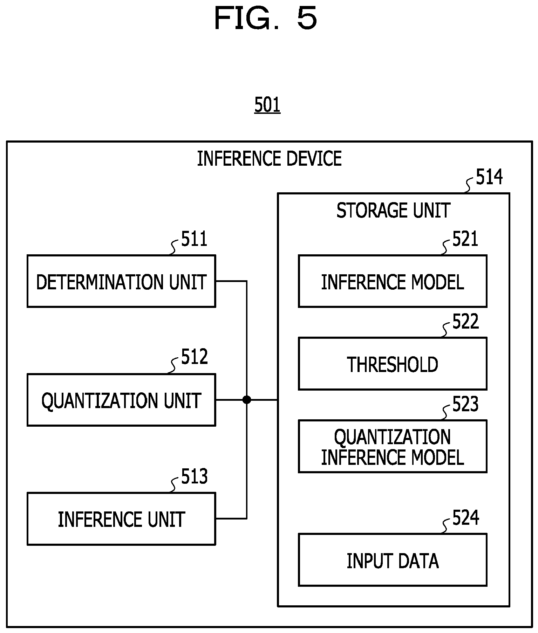

FIG. 5 illustrates an exemplary functional structure of an inference device corresponding to the threshold determination device 401 in FIG. 4. An inference device 501 in FIG. 5 includes a determination unit 511, a quantization unit 512, an inference unit 513, and a storage unit 514. The determination unit 511 corresponds to the determination unit 411 in FIG. 4.

The storage unit 514 stores an inference model 521 that performs inference in image processing, natural language processing, or the like and input data 524 to be inferred. The inference model 521 is a trained model including a neural network and, for example, is generated through supervised machine learning. The inference model 521 may be a transformer.

The determination unit 511 determines a threshold 522 used for clipping for each layer of the neural network included in the inference model 521 and stores the threshold 522 in the storage unit 514. The threshold 522 indicates the lower limit and the upper limit of the numerical value range of the numerical value to be quantized.

The determination unit 511 quantizes each of N (N is integer equal to or more than two) numerical values to be quantized based on the numerical value range defined by each of a plurality of candidates of the threshold 522 so as to generate a quantized numerical value corresponding to each numerical value.

In the quantization for converting the FP32 into the INT8, for example, the upper limit of the numerical value range is defined by a candidate TC of a positive threshold, and the lower limit of the numerical value range is defined by a candidate - TC of a negative threshold. In this case, the determination unit 511 can convert an i-th (i = 1 to N) numerical value v (i) to be quantized into an i-th numerical value q (i) after being quantized, for example, according to the following equation.

$$q (i) = round (v (i) / S) (2)$$

S in the equation (2) represents a scaling factor, and round (v (i) / S) represents a value obtained by rounding v (i) / S. However, when v (i) is equal to or more than TC, q (i) = 127, and when v (i) is equal to or less than - TC, q (i) = - 127.

Next, the determination unit 511 calculates a quantization error using each numerical value to be quantized and the quantized numerical value corresponding to each numerical value to be quantized and calculates a statistical value of the quantization error for each of the N numerical values to be quantized. Then, the determination unit 511 selects the threshold 522 from among the plurality of candidates based on the statistical value calculated from each of the plurality of candidates.

As the statistical value, for example, an average value, a median, a mode, a maximum value, or a sum is used, and as the threshold 522, for example, a candidate that has a minimum statistical value is selected. By using the statistical value of the quantization error, the threshold 522 suitable for each layer of the neural network can be easily determined.

In the quantization for converting the FP32 into the INT8, for example, an average value QE of the quantization error for each of the N numerical values to be quantized is calculated according to the following equation.

$$vq (i) = S * q (i) (3)$$

[Expression 2]

$$QE = \frac{1}{N} \sum_{i=1}^{N} |vq(i) - v(i)| \qquad (4)$$

vq (i) in the equation (3) represents a numerical value obtained by inversely quantizing q (i), and | vq (i) - v (i) | in the equation (4) represents an i-th quantization error. However, in a case of q (i) = 127, vq (i) = TC, and in a case where q (i) = - 127, vq (i) = - TC.

The quantization error includes information regarding an appearance frequency of each numerical value to be quantized and an appearance frequency of each quantized numerical value and information regarding these numerical values. Therefore, by selecting the candidate that has the minimum statistical value of the quantization error as the threshold 522, accuracy of the quantized numerical value is improved than that in a case where the candidate that has the minimum KL information amount is selected. Therefore, even in a case where a bit width of the quantized numerical value is small, decrease in the inference accuracy caused by the quantization is suppressed, and high inference accuracy can be maintained.

The quantization unit 512 generates a quantization inference model 523 by quantizing each of the N numerical values to be quantized using the threshold 522 for each layer of the neural network and stores the quantization inference model 523 in the storage unit 514.

In the quantization of the numerical value to be quantized, the quantization unit 512 converts the outlier deviated from the numerical value range defined by the lower limit and the upper limit indicated by the threshold 522 into a quantized numerical value corresponding to the lower limit or the upper limit. Then, the quantization unit 512 converts a numerical value within the numerical value range into the quantized numerical value using the scaling factor.

The quantization target is, for example, a weight, a bias, or an activation in each layer of the neural network. A bit width of the quantized numerical value is smaller than a bit width of the numerical value to be quantized. By quantizing the weight, the bias, or the activation, the neural network can be efficiently compressed.

The inference unit 513 infers the input data 524 using the quantization inference model 523 and outputs an inference result. By performing the inference using the quantization inference model 523 instead of the inference model 521, power consumption and a memory usage are reduced, and the inference processing is accelerated.

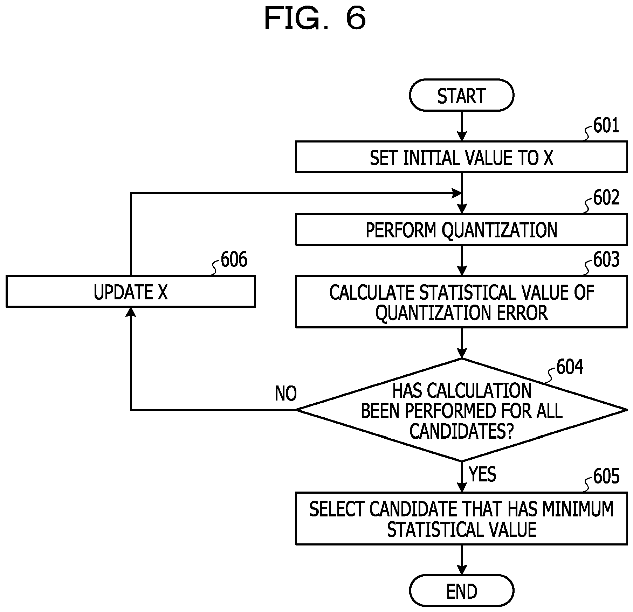

FIG. 6 is a flowchart illustrating an example of threshold determination processing executed by the inference device 501 in FIG. 5. The threshold determination processing in FIG. 6 is executed for each layer of the neural network included in the inference model 521.

First, the determination unit 511 sets an initial value to the variable X representing the candidate of the threshold 522 (step 601) and quantizes the N numerical values to be quantized using the variable X (step 602). In step 602, the determination unit 511 converts a numerical value deviated from the numerical value range defined by the variable X into a quantized numerical value corresponding to the variable X and converts the numerical value within the numerical value range into a quantized numerical value using the scaling factor.

Next, the determination unit 511 calculates a quantization error using each numerical value to be quantized and each quantized numerical value and calculates a statistical value of the quantization error for each of the N numerical values to be quantized (step 603).

Next, the determination unit 511 checks whether or not the statistical value of the quantization error has been calculated for all the candidates (step 604). When an unprocessed candidate remains (step 604, NO), the determination unit 511 updates the value of the variable X (step 606) and repeats processing in and after step 602 on the next candidate.

When the statistical value of the quantization error is calculated for all the candidates (step 604, YES), the determination unit 511 selects a candidate that has the minimum statistical value as the threshold 522 (step 605).

According to the threshold determination processing in FIG. 6, because the statistical value of the quantization error is calculated for each candidate of the threshold 522, accuracy of the quantized numerical value for each candidate can be estimated on the basis of the calculated statistical value. Therefore, a candidate that has higher accuracy can be selected from among the plurality of candidates.

Next, threshold determination processing in a case where the quantization target is a weight in each layer of a neural network will be described.

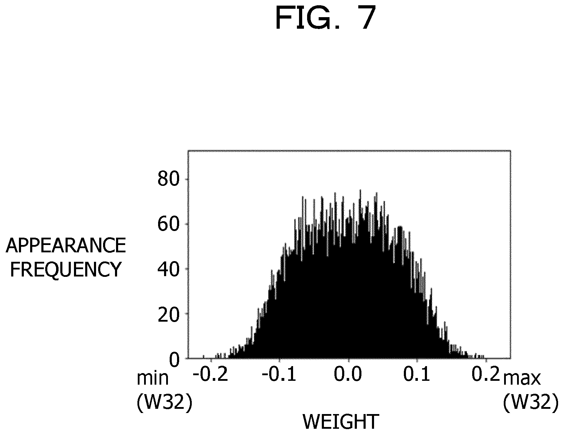

FIG. 7 illustrates an example of a distribution of weights to be quantized in a single layer of the neural network. The horizontal axis indicates a weight, and the vertical axis indicates an appearance frequency. The weight is represented by the FP32. W represents a set of N weights in a single layer. max (W) represents a maximum value of the N weights, and min (W) represents a minimum value of the N weights.

The distribution of the weights in FIG. 7 is expressed by a histogram including M bins. In this case, a bin width B is calculated according to the following equation.

$$B = (\max (W) - \min (W)) / M \quad (5)$$

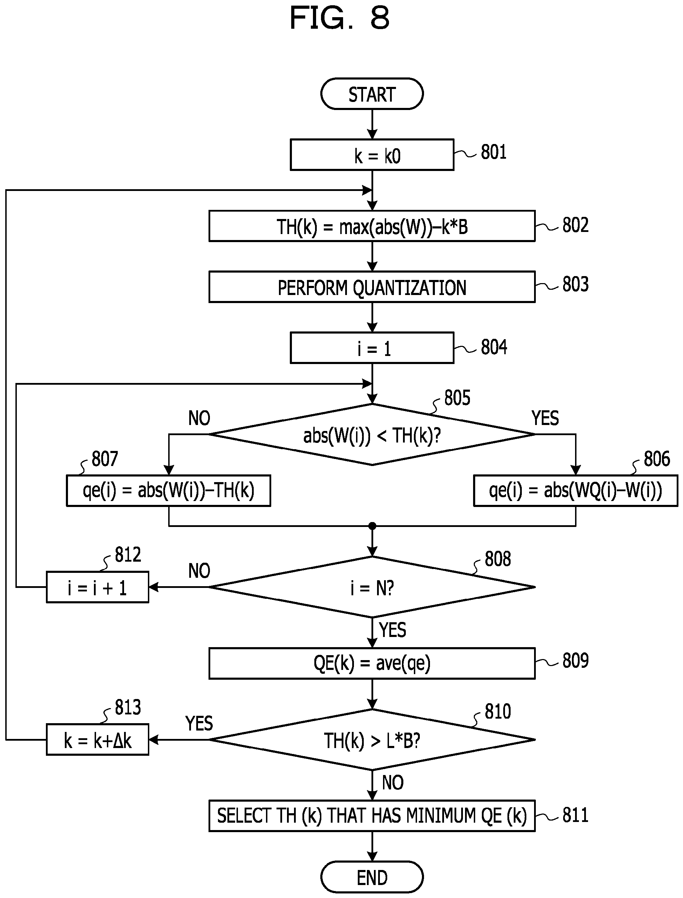

FIG. 8 illustrates a flowchart illustrating an example of threshold determination processing for a weight. The threshold determination processing in FIG. 8 is executed for each layer of the neural network included in the inference model 521.

A control variable k is used as a hyperparameter that specifies the candidate of the threshold 522. The lower limit of the numerical value range of the weight to be quantized is represented by - TH (k), and the upper limit is represented by + TH (k). TH (k) is a positive numerical value that changes according to k and represents a candidate of the upper limit of the numerical value range.

First, the determination unit 511 sets an initial value k0 to k (step 801) and calculates TH (k) according to the following equation (step 802).

$$TH\ (k) = max\ (abs\ (W)) - k * B\ (6)$$

abs (W) in the equation (6) represents a set of absolute values of the respective weights included in W, and max (abs (W)) represents a maximum value of elements of abs (W).

Next, the determination unit 511 quantizes N weights W (i) (i = 1 to N) to be quantized using TH (k) so as to generate a quantized weight Q (i) (step 803).

In step 803, the determination unit 511 converts W (i) equal to or less than - TH (k) into the quantized weight - THQ (k) corresponding to - TH (k) and converts W (i) equal to or more than TH (k) into the quantized weight THQ (k) corresponding to TH (k). Furthermore, the determination unit 511 converts W (i), which is larger than - TH (k) and smaller than TH (k), into Q (i) using the scaling factor. For example, in a case where Q (i) is represented by the INT8, THQ (k) = 127 may be satisfied.

Next, the determination unit 511 sets an initial value 1 to a control variable i (step 804) and compares an absolute value abs (W (i)) of the i-th weight W (i) with TH (k) (step 805).

When abs (W (i)) is smaller than TH (k) (step 805, YES), the determination unit 511 calculates a quantization error qe (i) for W (i) according to the following equation (step 806).

$$qe\ (i) = abs\ (WQ\ (i) - W\ (i))\ (7)$$

WQ (i) in the formula (7) represents a numerical value obtained by inversely quantizing Q (i), and abs (WQ (i) - W (i)) represents an absolute value of WQ (i) - W (i).

On the other hand, when abs (W (i)) is equal to or more than TH (k) (step 805, NO), the determination unit 511 calculates the quantization error qe (i) for W (i) according to the following equation (step 807).

$$qe\ (i) = abs\ (W\ (i)) - TH\ (k)\ (8)$$

Next, the determination unit 511 compares i with N (step 808). When i does not reach N (step 808, NO), the determination unit 511 increments i only by one (step 812) and repeats processing in and after step 805.

When i reaches N (step 808, YES), the determination unit 511 calculates an average value QE (k) of the N quantization errors qe (i) according to the following equation (step 809).

$$QE\ (k) = ave\ (qe)\ (9)$$

qe in the equation (9) represents a set of qe (1) to qe (N), and ave (qe) represents an average value of qe (1) to qe (N).

Next, the determination unit 511 compares TH (k) with L * B (step 810). L represents a positive integer. When TH (k) is larger than L * B (step 810, YES), the determination unit 511 increments k by only Δk (step 813) and repeats processing in and after step 802. For example, in the distribution of the weights illustrated in FIG. 7, in a case of M = 2048, k0 = 0, Δk = 0.2, and L = 127 may be satisfied.

When TH (k) is equal to or less than L * B (step 810, NO), the determination unit 511 ends the calculation of QE (k) and selects TH (k) that has the minimum QE (k) among the calculated QE (k) (step 811). Then, the determination unit 511 determines the threshold 522 indicating the lower limit of the numerical value range as - TH (k) and determines the threshold 522 indicating the upper limit of the numerical value range as TH (k).

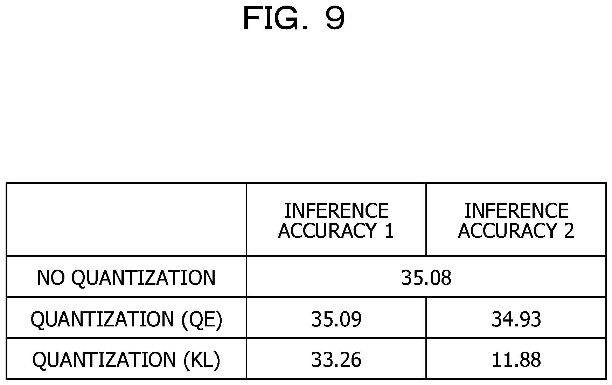

FIG. 9 illustrates an example of an experimental result in a case where the quantization according to the embodiment is applied. A trained model and a dataset are similar to those of the experiment illustrated in FIG. 3.

Inference accuracy without quantization and inference accuracy 1 and inference accuracy 2 of the quantization (KL) are similar to those of the experimental result illustrated in FIG. 3. The quantization (QE) represents a case where the quantization based on the threshold 522 having the minimum QE (k) is applied and inference is performed.

The inference accuracy 1 of the quantization (QE) is 35.09, and the inference accuracy 2 of the quantization (QE) is 34.93. In this case, it can be understood that the inference accuracy 1 and the inference accuracy 2 of the quantization (QE) are rarely different from the inference accuracy without the quantization. Therefore, the inference accuracy about the same as that before the quantization is maintained by determining the threshold 522 using the average value of the quantization error instead of the KL information amount.

The configuration of the threshold determination device 401 in FIG. 4 is merely an example, and the components may be changed depending on use or conditions of the threshold determination device 401. The structure of the inference device 501 in FIG. 5 is merely an example, and some components may be omitted or changed depending on use or conditions of the inference device 501.

The flowcharts in FIGs. 1, 6, and 8 are merely examples, and some of the processing may be omitted or changed depending on use or conditions of the threshold determination processing. For example, in the threshold determination processing in FIG. 8, the quantization target may be changed to a bias or an activation.

The update processing illustrated in FIG. 2 is merely an example, and the method for updating the candidate of the threshold changes depending on the use or the conditions of the threshold determination processing. The experimental results illustrated in FIGs. 3 and 9 are merely examples, and the inference accuracy changes depending on the inference model and the quantization target. The distribution of the weights illustrated in FIG. 7 is merely an example, and the distribution of the weights changes depending on the inference model.

The equations (1) to (9) are merely examples, and the inference device 501 may determine the threshold 522 using another calculation formula.

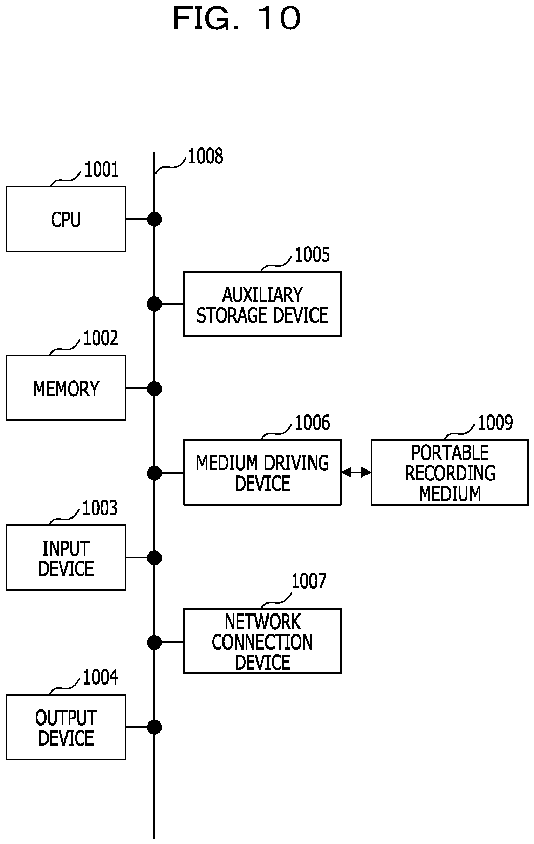

FIG. 10 illustrates an exemplary hardware structure of an information processing device (computer) used as the threshold determination device 401 in FIG. 4 and the inference device 501 in FIG. 5. The information processing device in FIG. 10 includes a central processing unit (CPU) 1001, a memory 1002, an input device 1003, an output device 1004, an auxiliary storage device 1005, a medium driving device 1006, and a network connection device 1007. Those components are hardware, and are coupled to each other by a bus 1008.

The memory 1002 is, for example, a semiconductor memory such as a read only memory (ROM) or a random access memory (RAM) and stores programs and data to be used for processing. The memory 1002 may operate as the storage unit 514 in FIG. 5.

The CPU 1001 (processor), for example, executes a program using the memory 1002 so as to operate as the determination unit 411 in FIG. 4. The CPU 1001 executes the program using the memory 1002 so as to also operate as the determination unit 511, the quantization unit 512, and the inference unit 513 in FIG. 5.

For example, the input device 1003 is a keyboard, a pointing device, or the like and is used for inputting instructions or information from a user or an operator. For example, the output device 1004 is a display device, a printer, or the like and is used for an inquiry or an instruction to the user or the operator, and outputting a processing result. The processing result may be an inference result for the input data 524.

The auxiliary storage device 1005 is, for example, a magnetic disk device, an optical disk device, a magneto-optical disk device, a tape device, or the like. The auxiliary storage device 1005 may be a hard disk drive. The information processing device may store programs and data in the auxiliary storage device 1005 and load these programs and data into the memory 1002 to use.

The medium driving device 1006 drives a portable recording medium 1009 and accesses recorded content of the portable recording medium 1009. The portable recording medium 1009 is a memory device, a flexible disk, an optical disk, a magneto-optical disk, or the like. The portable recording medium 1009 may be a compact disk read only memory (CD-ROM), a digital versatile disk (DVD), a universal serial bus (USB) memory, or the like. The user or the operator can store the programs and data in the portable recording medium 1009 and can use these programs and data by loading the programs and data into the memory 1002.

As described above, a computer-readable recording medium in which the programs and data used for processing are stored is a physical (non-transitory) recording medium such as the memory 1002, the auxiliary storage device 1005, or the portable recording medium 1009.

The network connection device 1007 is a communication interface circuit that is connected to a communication network such as a local area network (LAN) or a wide area network (WAN), and that performs data conversion according to communication. The information processing device can receive programs and data from an external device via the network connection device 1007 and load these programs and data into the memory 1002 to use.

Note that, the information processing device does not need to include all the components in FIG. 10, and some components may be omitted depending on use or conditions of the information processing device. For example, in a case where an interface with the user or the operator is not needed, the input device 1003 and the output device 1004 may be omitted. In a case where the portable recording medium 1009 or the communication network is not used, the medium driving device 1006 or the network connection device 1007 may be omitted.

While the disclosed embodiment and the advantages thereof have been described in detail, those skilled in the art will be able to make various modifications, additions, and omissions without departing from the scope of the embodiment as explicitly set forth in the claims.

**Claims**

1. A threshold determination program in which a computer performs processing of:

   quantitating a plurality of numerical values of a quantization target using a variable representing a candidate of a threshold; and
   determining the threshold based on a quantization error for each of the plurality of numerical values, wherein the quantization error is specified based on the quantitating.

2. The threshold determination program according to claim 1, wherein the quantitating includes converting a numerical value among the plurality of numerical values deviated from a numerical value range defined by the candidate into a quantized numerical value that corresponds to the candidate.

3. The threshold determination program according to any one of claims 1 to 2, wherein the determining includes determining the threshold based on a statistical value of the quantization error for each of the plurality of numerical values.

4. The threshold determination program according to claims 1 to 3, wherein

   the quantitating includes generating a quantized numerical value that corresponds to each of a plurality of numerical values by quantizing each of the plurality of numerical values based on a numerical value range defined by each of a plurality of candidates of the threshold, the plurality of candidates including the candidate, the determining includes
   calculating a statistical value based on each of the plurality of numerical values and the quantized numerical value that corresponds to each of the plurality of numerical values, and
   selecting the threshold from among the plurality of candidates based on the statistical value that is calculated from each of the plurality of candidates.

5. The threshold determination program according to any one of claims 1 to 4, wherein the quantization target is a weight, a bias, or an activation in a neural network.

6. A threshold determination method comprising:

   quantitating a plurality of numerical values of a quantization target using a variable representing a candidate of a threshold; and
   determining the threshold based on a quantization error for each of the plurality of numerical values, wherein the quantization error is specified based on the quantitating.

7. The threshold determination method according to claim 6,
   the quantitating includes converting a numerical value among the plurality of numerical values deviated from a numerical value range defined by the candidate into a quantized numerical value that corresponds to the candidate.

8. The threshold determination method according to any one of claims 6 to 7, wherein the determining includes determining the threshold based on a statistical value of the quantization error for each of the plurality of numerical values.

9. The threshold determination method according to any one of claims 6 to 8, wherein

   the quantitating includes generating a quantized numerical value that corresponds to each of a plurality of numerical values by quantizing each of the plurality of numerical values based on a numerical value range defined by each of a plurality of candidates of the threshold, the plurality of candidates including the candidate, the determining includes:

   calculating a statistical value based on each of the plurality of numerical values and the quantized numerical value that corresponds to each of the plurality of numerical values, and
   selecting the threshold from among the plurality of candidates based on the statistical value that is calculated from each of the plurality of candidates.

10. The threshold determination method according to any one of claims 6 to 9, wherein the quantization target is a weight, a bias, or an activation in a neural network.

11. An information processing apparatus comprising:
   a determination unit configured to:

   quantitate a plurality of numerical values of a quantization target using a variable representing a candidate of a threshold, and
   determine the threshold based on a quantization error for each of the plurality of numerical values, wherein the quantization error is specified based on the quantitating.

12. The information processing apparatus according to claim 11, wherein
   the determination unit is further configured to convert a numerical value among the plurality of numerical values deviated from a numerical value range defined by the candidate into a quantized numerical value that corresponds to the candidate.

13. The information processing apparatus according to any one of claims 11 to 12, wherein the determination unit is further configured to determine the threshold based on a statistical value of the quantization error for each of the plurality of numerical values.

14. The information processing apparatus according to any one of claims 11 to 13, wherein
   the determination unit is further configured to:

   generate a quantized numerical value that corresponds to each of a plurality of numerical values by quantizing each of the plurality of numerical values based on a numerical value range defined by each of a plurality of candidates of the threshold, the plurality of candidates including the candidate,
   calculate a statistical value based on each of the plurality of numerical values and the quantized numerical value that corresponds to each of the plurality of numerical values, and
   select the threshold from among the plurality of candidates based on the statistical value that is calculated from each of the plurality of candidates.

15. The information processing apparatus according to any one of claims 11 to 14, wherein the quantization target is a weight, a bias, or an activation in a neural network.

# FIG. 1

START

SET INITIAL VALUE TO X — 101

PERFORM QUANTIZATION — 102

UPDATE X — 106

CALCULATE KL INFORMATION AMOUNT — 103

HAS CALCULATION BEEN PERFORMED FOR ALL CANDIDATES? — 104

NO

YES

SELECT CANDIDATE THAT HAS MINIMUM KL INFORMATION AMOUNT — 105

END

EP 4 141 745 A1

# FIG. 2

12

# FIG. 3

|  | INFERENCE ACCURACY 1 | INFERENCE ACCURACY 2 |
|---|---|---|
| NO QUANTIZATION | 35.08 ||
| QUANTIZATION (KL) | 33.26 | 11.88 |

# FIG. 4

401

```
┌─────────────────────────────────┐
│      THRESHOLD                  │
│   DETERMINATION DEVICE          │
│                                 │
│  411~┌──────────────────┐       │
│      │  DETERMINATION   │       │
│      │      UNIT        │       │
│      └──────────────────┘       │
│                                 │
└─────────────────────────────────┘
```

# FIG. 5

501

INFERENCE DEVICE

514
STORAGE UNIT

511
DETERMINATION UNIT

521
INFERENCE MODEL

512
QUANTIZATION UNIT

522
THRESHOLD

523
QUANTIZATION
INFERENCE MODEL

513
INFERENCE UNIT

524
INPUT DATA

# FIG. 6

START

SET INITIAL VALUE TO X ⌐601

PERFORM QUANTIZATION ⌐602

UPDATE X ⌐606

CALCULATE STATISTICAL VALUE OF QUANTIZATION ERROR ⌐603

HAS CALCULATION BEEN PERFORMED FOR ALL CANDIDATES? ⌐604

NO

YES

SELECT CANDIDATE THAT HAS MINIMUM STATISTICAL VALUE ⌐605

END

# FIG. 7

# FIG. 8

START

k = k0 — 801

TH(k) = max(abs(W))–k*B — 802

PERFORM QUANTIZATION — 803

i = 1 — 804

805
abs(W(i)) < TH(k)?

NO

YES

807
qe(i) = abs(W(i))–TH(k)

806
qe(i) = abs(WQ(i)–W(i))

812
i = i + 1

NO

808
i = N?

YES

QE(k) = ave(qe) — 809

813
k = k+Δk

YES

810
TH(k) > L*B?

NO

SELECT TH (k) THAT HAS MINIMUM QE (k) — 811

END

# FIG. 9

|  | INFERENCE ACCURACY 1 | INFERENCE ACCURACY 2 |
|---|---|---|
| NO QUANTIZATION | 35.08 | |
| QUANTIZATION (QE) | 35.09 | 34.93 |
| QUANTIZATION (KL) | 33.26 | 11.88 |

# FIG. 10

```
1001
CPU ●————1008

           1005
           AUXILIARY
           STORAGE DEVICE ●

1002
MEMORY ●

                 1006              1009
                 MEDIUM DRIVING   PORTABLE
                 DEVICE ●  ←→     RECORDING
                                  MEDIUM

1003
INPUT
DEVICE ●

                 1007
                 NETWORK
                 CONNECTION ●
                 DEVICE

1004
OUTPUT
DEVICE ●
```

Europäisches
Patentamt

European
Patent Office

Office européen
des brevets

# EUROPEAN SEARCH REPORT

Application Number

EP 22 17 0976

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Migacz Szymon: "8-bit Inference with TensorRT", , 8 May 2017 (2017-05-08), pages 1-41, XP55967266, Retrieved from the Internet: URL:https://on-demand.gputechconf.com/gtc/ 2017/presentation/s7310-8-bit-inference-wi th-tensorrt.pdf [retrieved on 2022-10-03] * slides 2, 12-17, 28 * ----- | 1-15 | INV. G06N3/04 |
| X | CN 109 583 561 A (HANGZHOU HIKVISION DIGITAL TEC) 5 April 2019 (2019-04-05) * claims 1, 4 * ----- | 1-15 | |

|  |  |  | TECHNICAL FIELDS SEARCHED (IPC) |
|---|---|---|---|
|  |  |  | G06N |

The present search report has been drawn up for all claims

| Place of search | Date of completion of the search | Examiner |
|---|---|---|
| The Hague | 3 October 2022 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    .......................................................................

& : member of the same patent family, corresponding document

EPO FORM 1503 03.82 (P04C01)

EP 4 141 745 A1

## ANNEX TO THE EUROPEAN SEARCH REPORT
## ON EUROPEAN PATENT APPLICATION NO.

EP 22 17 0976

This annex lists the patent family members relating to the patent documents cited in the above-mentioned European search report.
The members are as contained in the European Patent Office EDP file on
The European Patent Office is in no way liable for these particulars which are merely given for the purpose of information.

03-10-2022

| Patent document cited in search report | | Publication date | Patent family member(s) | Publication date |
|---|---|---|---|---|
| CN 109583561 | A | 05-04-2019 | NONE | |

EPO FORM P0459

For more details about this annex : see Official Journal of the European Patent Office, No. 12/82

22

## REFERENCES CITED IN THE DESCRIPTION

**Patent documents cited in the description**

- JP 2021500654 A
- JP 2020009048 A
- JP 2020113273 A

**Non-patent literature cited in the description**

- **A. CANZIANI et al.** An Analysis of Deep Neural Network Models for Practical Applications. *arXiv:1605.07678v4,* 14 April 2017
- **O. SHARIR et al.** The Cost of Training NLP Models: A Concise Overview. *arXiv:2004.08900v1,* 19 April 2020
- **SZYMON MIGACZ ; NVIDIA.** *8-bit Inference with TensorRT,* 08 May 2017, https://on-demand.gpu-techconf.com/gtc/2017/presentation/s7310-8-bit-inference-with-tensorrt.pdf
- **A. VASWANI et al.** Attention is All You Need. *31st Conference on Neural Information Processing Systems (NIPS 2017,* 2017